# EUROPÄISCHE PATENTSCHRIFT

(11) **EP 4 191 193 B1**
(45) Veröffentlichungstag und Bekanntmachung des Hinweises auf die Patenterteilung: **04.11.2026**
(21) Anmeldenummer: 22207090.6
(22) Anmeldetag: 14.11.2022
(51) Int. Cl.: F41G 3/26, A63F 13/213, A63F 13/426, A63F 13/837, F41J 5/02

(54) **VERFAHREN ZUR ERMITTLUNG EINER MITTELS EINER SIMULATIONSWAFFE ANVISIERTEN STELLE, SOWIE SCHIESSSIMULATOR**
METHOD FOR DETERMINING A LOCATION TARGETED BY A SIMULATION WEAPON, AND SHOOTING SIMULATOR
PROCÉDÉ DE DÉTERMINATION D'UN EMPLACEMENT INSTALLÉ AU MOYEN D'UNE ARME DE SIMULATION ET SIMULATEUR DE TIR

(30) Priorität: 01.12.2021 DE 102021131563
(43) Veröffentlichungstag der Anmeldung: 07.06.2023
(73) Patentinhaber: Thales Management & Services Deutschland GmbH, Stuttgart (DE)
(72) Erfinder: Schuch, Daniel, 51427 Bergisch Gladbach (DE); Stahl, Adrian, 56072 Koblenz (DE)
(74) Vertreter: DREISS Patentanwälte PartG mbB

(56) Entgegenhaltungen:
- EP-A2- 2 244 049
- WO-A1-02/06758

## Beschreibung

Die Erfindung betrifft ein Verfahren zur Ermittlung der Position einer mittels einer Simulationswaffe anvisierten Stelle auf einer Zielfläche sowie einen Schießsimulator nach den Oberbegriffen der nebengeordneten Ansprüche.

Die EP 3 088 836 A1 beschreibt einen Schießsimulator und ein Verfahren zur Ermittlung der Position auf einer Zielfläche einer mittels einer Simulationswaffe anvisierten Stelle. Bei dem bekannten Schießsimulator umfasst die Simulationswaffe einen optischen Sender, mit dem ein Lichtpunkt auf der Zielfläche erzeugt werden kann. Die Zielfläche wird von einer Kamera beobachtet, die den Lichtpunkt auf der Zielfläche erfasst. Durch die Auswertung des Kamerabildes erkennt das System, wohin der Schütze mit der Simulationswaffe zielt.

Wenn mehrere Schützen auf die Zielfläche zielen, werden von der Kamera mehrere Lichtpunkte erfasst. Zur Zuordnung der Lichtpunkte zu den einzelnen Simulationswaffen werden die einzelnen Lichtpunkte nacheinander einzeln eingeschaltet, während die verbleibenden Lichtquellen ausgeschaltet bleiben. Das System kann somit die Lichtpunkte den Simulationswaffen zuordnen, solange alle Lichtpunkte separiert auf dem Bild der Kamera erscheinen.

EP 2 244 049 A2 sowie WO 02/06758 A1 offenbaren Verfahren und Vorrichtungen, bei denen mittels Laser Abtastlinien auf einen Schirm projiziert werden.

Die vorliegende Erfindung hat die Aufgabe, ein Verfahren zur Ermittlung der Position einer mittels einer Simulationswaffe anvisierten Stelle sowie einen Schießsimulator bereitzustellen, die es ermöglichen, eine große Anzahl von Simulationswaffen in dem Schießsimulator gleichzeitig zu betreiben, bei gleichzeitig hoher Genauigkeit bei der Ermittlung der mittels der Simulationswaffe anvisierten Stelle.

Diese Aufgabe wird erfindungsgemäß durch ein Verfahren und einen Schießsimulator mit den Merkmalen der nebengeordneten Ansprüche gelöst. Vorteilhafte Weiterbildungen der Erfindung sind in Unteransprüchen genannt.

Bei der Erfindung hat die Simulationswaffe keine optisch aktive, sondern eine optisch passive Rolle. Die Simulationswaffe strahlt die zur Erzeugung von Lichtpunkten notwendige Lichtstrahlung nicht mehr ab. Stattdessen wird überhaupt kein Lichtpunkt mehr auf der Zielfläche erzeugt. Somit können sich auf der Zielfläche erzeugte Lichtpunkte nicht mehr gegenseitig stören.

Da die Simulationswaffen selbst nicht mehr aktiv einen Lichtstrahl, beispielsweise einen Laserstrahl, aussenden, wird die Betriebssicherheit verbessert, denn die Simulationswaffen sind "augensicher". Auch wird keine Kamera mehr benötigt mit entsprechender Bildauswertung. Stattdessen genügen an den Simulationswaffen sehr einfache und preiswerte opto-elektronische Erfassungseinrichtungen.

Besonders vorteilhaft ist auch, dass die Anzahl der gleichzeitig in dem Schießsimulator betriebenen Simulationswaffen praktisch unbegrenzt ist. Auch die Auswertung, die zur Ermittlung der Position der anvisierten Stelle führt, ist vergleichsweise einfach und kann mit vergleichsweise preiswerten Rechenmitteln ausgeführt werden. Schließlich wird durch das erfindungsgemäße Verfahren eine direkte Zuordnung des Zeitpunkts, zu dem die Simulationswaffe ausgelöst wurde ("Schusszeitpunkt"), zu dem Zielpunkt bzw. der anvisierten Stelle möglich. Die Simulationswaffe kann mittels der mit der Helligkeitsänderung zusammenhängenden Zeitgröße quasi selbst übermitteln, wann wohin geschossen wurde.

Konkret wird dies ermöglicht durch ein Verfahren zur Ermittlung der Position einer mittels einer Simulationswaffe anvisierten Stelle auf einer Zielfläche, welches insbesondere die folgenden Schritte aufweist: Zunächst werden in einem Schritt a Helligkeitsänderungen in einem vorzugsweise nicht sichtbaren Wellenlängenbereich auf der Zielfläche an unterschiedlichen Stellen und zu unterschiedlichen Zeitpunkten erzeugt. Jeder Stelle auf der Zielfläche ist somit eine diskrete Zeitgröße der Helligkeitsänderung zugeordnet. Dabei versteht sich, dass der Begriff "Zeitgröße" im vorliegenden Fall nicht zwingend nur im Sinne der üblichen physikalischen Größe "Zeit" mit der beispielhaften Einheit "Sekunde" zu verstehen ist, sondern auch eine beliebige andere Größe sein kann, die in irgendeiner Art und Weise direkt oder indirekt mit den Zeitpunkten der Helligkeitsänderungen zusammenhängt bzw. diese charakterisiert. Auch versteht sich, dass üblicherweise die Helligkeitsänderungen periodisch wiederkehrend erzeugt werden.

Vom Schützen wird in einem Schritt b bei der Simulationswaffe eine bestimmte Stelle - das Ziel - auf der Zielfläche anvisiert. Hierdurch wird die bestimmte Stelle auch von der mit der Simulationswaffe starr gekoppelten opto-elektronischen Erfassungseinrichtung anvisiert. Dies gestattet es, dass in einem Schritt c Helligkeitsänderungen nur an der anvisierten Stelle der Zielfläche mittels der opto-elektronischen Erfassungseinrichtung erfasst werden. Die opto-elektronische Erfassungseinrichtung gibt somit zu ganz bestimmten Zeitpunkten ein Signal aus, welches mit den zum jeweiligen Zeitpunkt erfassten Helligkeitsänderungen zusammenhängt.

Danach wird in einem Schritt d eine mit der mindestens einen erfassten Helligkeitsänderung zusammenhängende Zeitgröße ermittelt. In einem einfachen beispielhaften Fall ist die Zielfläche in eine Vielzahl von einzelnen Sektoren unterteilt, und in jedem Sektor wird eine Helligkeitsänderung nur zu einem ganz bestimmten Zeitpunkt erzeugt. Die Zeitgröße wäre in diesem Fall der besagte bestimmte Zeitpunkt.

Schließlich wird in einem Schritt e die Position der anvisierten Stelle auf der Basis der ermittelten Zeitgröße ermittelt. In dem oben beschriebenen besonders einfachen Fall, in dem die Helligkeitsänderung in einem Sektor mit einem ganz bestimmten Zeitpunkt verknüpft ist, identifiziert der bestimmte Zeitpunkt unmittelbar den anvisierten Sektor.

Ferner ist vorgesehen, dass der Schritt a folgende Unterschritte umfasst: a1. Bewegen einer ersten Hell-Dunkel-Grenze parallel zu einer ersten Richtung über die Zielfläche; a2. danach: Bewegen einer zweiten Hell-Dunkel-Grenze parallel zu einer zweiten Richtung über die Zielfläche, wobei die zweite Richtung orthogonal zur ersten Richtung ist. Technisch ist das Bewegen einer solchen ersten Hell-Dunkel-Grenze und einer solchen zweiten Hell-Dunkel-Grenze einfach realisierbar, beispielsweise durch eine Strahlerzeugungseinrichtung zur Erzeugung eines auf die Zielfläche gerichteten Lichtstrahls (vorzugsweise im unsichtbaren Wellenlängenbereich) und mindestens eine bewegliche Blende ("Shutter"). Auch die Auswertung ist vergleichsweise einfach, da durch die Auswertung der auf der ersten Hell-Dunkel-Grenze basierenden Zeitgröße eine erste Positionslinie und durch die Auswertung der auf der zweiten Hell-Dunkel-Grenze basierenden Zeitgröße eine zweite Positionslinie erhalten wird, und der Schnittpunkt der beiden Positionslinien ergibt dann auf einfache Art und Weise die Position der anvisierten Stelle.

Wie bereits oben erwähnt wurde, ist der Begriff "Zeitgröße" sehr breit zu verstehen. Bei periodisch wiederkehrenden und sich über die Zielfläche bewegenden Helligkeitsänderungen beispielsweise von Dunkel nach Hell und dann wieder von Hell nach Dunkel kann als Zeitgröße beispielsweise ein Quotient gebildet werden. Ist die Geschwindigkeit, mit der sich die Helligkeitsänderung über die Zielfläche bewegt, konstant, kann unmittelbar aus dem Verhältnis der Ausgangspegelzeiten (Zeit mit Pegel hoch zu Zeit mit Pegel niedrig) die Stelle, auf die die opto-elektronische Erfassungseinrichtung und damit die Simulationswaffe gerichtet ist, identifiziert werden.

Ebenfalls ist vorgesehen, dass der Schritt a1 folgende Unterschritte umfasst: a1.1 Bewegen der ersten Hell-Dunkel-Grenze in der ersten Richtung; a1.2 Bewegen der ersten Hell-Dunkel-Grenze entgegen der ersten Richtung. Dies erleichtert die Auswertung, da direkt aus dem Verhältnis der Hell-Dauer zur Dunkel-Dauer bzw. aus einer mittleren Helligkeit auf die Position bzw. Positionslinie (parallel zur ersten Richtung) der anvisierten Stelle geschlossen werden kann.

Außerdem ist vorgesehen, dass der Schritt a2 folgende Unterschritte umfasst: a2.1 Bewegen der zweiten Hell-Dunkel-Grenze in der zweiten Richtung; a2.2 Bewegen der zweiten Hell-Dunkel-Grenze entgegen der zweiten Richtung. Dies erleichtert die Auswertung, da direkt aus dem Verhältnis der Hell-Dauer zur Dunkel-Dauer bzw. aus einer mittleren Helligkeit auf die Position bzw. Positionslinie (parallel zur zweiten Richtung) der anvisierten Stelle geschlossen werden kann.

Erfindungsgemäß ist weiterhin vorgesehen, dass zwischen dem Schritt a1.1 und dem Schritt a1.2 keine Bewegung (Bewegungspause) durchgeführt wird, und dass die Dauer der Bewegungspause größer ist als die Gesamtdauer der Schritte a2.1 und a2.2, oder dass zwischen dem Schritt a2.1 und dem Schritt a2.2 keine Bewegung (Bewegungspause) durchgeführt wird, und dass die Dauer der Bewegungspause größer ist als die Gesamtdauer der Schritte a1.1 und a1. Hierdurch wird die Genauigkeit der Auswertung gesteigert, da Mehrdeutigkeiten eliminiert werden.

Bei einer Weiterbildung ist vorgesehen, dass die erste Richtung horizontal und die zweite Richtung vertikal ist. Dies ist technisch einfach zu realisieren, da übliche Zielflächen rechteckig mit horizontalen und vertikalen Rändern sind, und somit die ermittelten Positionslinien die Position in einem kartesischen Koordinatensystem wiedergeben.

Bei einer Weiterbildung ist vorgesehen, dass die Helligkeitsänderung in einem Nahinfrarot-Wellenlängenbereich erzeugt wird. Die hierfür erforderliche Hardware ist preiswert erhältlich.

Wie eingangs erwähnt wurde, gehört zu der Erfindung auch ein Schießsimulator, welcher umfasst: eine Zielfläche, eine Simulationswaffe und eine Recheneinrichtung mit einem Mikroprozessor und einem Speicher, auf dem Programmcode abgespeichert ist, der auf dem Mikroprozessor ablaufen kann. Die Zielfläche kann eine passive Leinwand sein, auf die ein Bild in Form eines Standbilds oder ein Bewegtbild projiziert wird, oder kann ein aktiver Bildschirm sein, der zur Erzeugung eines Standbilds oder eines Bewegtbilds entsprechend angesteuert wird. Die Recheneinrichtung kann ein üblicher Computer, beispielsweise ein PC sein.

Es ist erfindungsgemäß vorgesehen, dass der Schießsimulator eine Erzeugungseinrichtung zur Erzeugung einer Helligkeitsänderung auf der Zielfläche in einem nicht sichtbaren Wellenlängenbereich an unterschiedlichen Stellen auf der Zielfläche zu unterschiedlichen Zeitpunkten aufweist. Bei einer passiven Leinwand kann dies beispielsweise in Form eines Projektors geschehen, bei einem aktiven Bildschirm durch eine entsprechende Ansteuerung des Bildschirms. Die Simulationswaffe umfasst eine opto-elektronische Erfassungseinrichtung zur Erfassung der Helligkeitsänderung nur an einer mit der Simulationswaffe anvisierten Stelle auf der Zielfläche.

Die erfindungsgemäß vorgesehene Recheneinrichtung ist dazu eingerichtet und ausgebildet, eine mit der erfassten Helligkeitsänderung zusammenhängende Zeitgröße zu ermitteln und auf der Basis der ermittelten Zeitgröße die Position der anvisierten Stelle zu ermitteln. Als Simulationswaffen kommen beinahe beliebige Waffen infrage, die jedoch bei einer Betätigung kein Projektil abschießen, sondern im vorliegenden Fall mittels der opto-elektronischen Erfassungseinrichtung lediglich zum Zeitpunkt der Betätigung vorhandene physikalische Randbedingungen, nämlich die oben erwähnten Helligkeitsänderungen, erfassen und die hierdurch erzeugten Signale an die Recheneinrichtung weiterleiten und/oder selbst verarbeiten.

Bei einer Weiterbildung ist vorgesehen, dass die Erzeugungseinrichtung eine Strahlerzeugungseinrichtung zur Erzeugung eines auf die Zielfläche gerichteten Lichtstrahls und mindestens eine bewegliche Blende umfasst. Dies ist technisch einfach realisierbar.

Bei einer Weiterbildung ist vorgesehen, dass die bewegliche Blende die Form eines rechtwinkligen Dreiecks aufweist, und dass eine Bewegungsrichtung der Blende durch den Lichtstrahl im Wesentlichen parallel zu einer Hypotenuse der Blende und im Wesentlichen parallel zu einer Diagonalen der Zielfläche verläuft. Hierdurch wird durch eine einzige Blende sowohl die Bewegung der oben erwähnten ersten Hell-Dunkel-Grenze als auch der oben erwähnten zweiten Hell-Dunkel-Grenze bewirkt. Dies ist technisch somit ebenfalls besonders einfach und daher preiswert.

Bei einer Weiterbildung ist vorgesehen, dass die Erzeugungseinrichtung mindestens zwei Blenden aufweist, die sich zeitlich versetzt und gegensinnig bewegen. Hierdurch kann die zeitliche Auflösung erhöht und damit die Genauigkeit der Bestimmung der Position der anvisierten Stelle verbessert werden.

Bei einer Weiterbildung ist vorgesehen, dass die opto-elektronische Erfassungseinrichtung eine Strahlerfassungsoptik und mindestens einen IR-Fototransistor oder mindestens eine IR-Fotodiode aufweist. Diese Komponenten sind sehr preiswert.

Bei einer Weiterbildung ist vorgesehen, dass die Simulationswaffe eine drahtlose Datenübertragungseinrichtung aufweist, die ein Signal der opto-elektronischen Erfassungseinrichtung und/oder eine hieraus gewonnene Größe an die Recheneinrichtung überträgt. Der Benutzer des Schießsimulators bzw. der Simulationswaffe kann die Simulationswaffe somit benutzen, ohne durch Kabel an der freien Bewegung gehindert zu sein.

Nachfolgend werden Ausführungsformen der Erfindung unter Bezugnahme auf die beigefügte Zeichnung erläutert. In der Zeichnung zeigen:
- Figur 1: eine schematisierte perspektivische Darstellung eines Schießsimulators mit einer Simulationswaffe mit einer opto-elektronischen Erfassungseinrichtung und einer Zielfläche;
- Figur 2: einen schematisierten Schnitt durch die opto-elektronische Erfassungseinrichtung von Figur 1;
- Figur 3: eine perspektivische Darstellung der Zielfläche von Figur 1 zur Visualisierung einer horizontalen Bewegung einer vertikalen ersten Hell-Dunkel-Grenze in einer ersten Richtung;
- Figur 4: eine perspektivische Darstellung der Zielfläche von Figur 1 zur Visualisierung einer vertikalen Bewegung einer horizontalen zweiten Hell-Dunkel-Grenze in einer zweiten Richtung;
- Figur 5: eine Reihe von schematischen Darstellungen einer Erzeugungseinrichtung zur Erzeugung der Hell-Dunkel-Grenzen der Figuren 3 und 4 zu unterschiedlichen Zeitpunkten;
- Figur 6: ein Diagramm, in dem für vier Eckpunkte der Zielfläche der Figur 1 Signalpegel der opto- elektronischen Erfassungseinrichtung über der Zeit aufgetragen sind;
- Figur 7: eine Draufsicht auf die Zielfläche von Figur 1 mit einer durch die Simulationswaffe von Figur 1 anvisierten Stelle und zugehörigen Zeitwerten zur Ermittlung der Position der anvisierten Stelle;
- Figur 8: eine schematische Draufsicht auf eine andere Ausführungsform einer Erzeugungseinrichtung zur Erzeugung einer Hell-Dunkel-Grenze; und
- Figur 9: eine schematische perspektivische Darstellung einer nochmals anderen Ausführungsform einer Erzeugungseinrichtung zur Erzeugung einer Hell-Dunkel-Grenze.

Nachfolgend tragen in unterschiedlichen Ausführungsformen und unterschiedlichen Figuren funktionsäquivalente Elemente und Bereiche die gleichen Bezugszeichen.

Ein Schießsimulator trägt in den Figuren insgesamt das Bezugszeichen 10. Er umfasst eine vorliegend beispielhaft im wesentlichen rechteckige Zielfläche 12, die vorliegend beispielhaft als transluzente Projektionsfläche ausgebildet ist. Auf diese Zielfläche 12 wird von hinten durch einen Projektor 14 ein Bewegtbild projiziert, was durch gestrichelte Linien 16 angedeutet ist. Das Bewegtbild kann beispielsweise eine bestimmte Umgebungssituation darstellen, die in dem Schießsimulator 10 simuliert werden soll.

Zu dem Schießsimulator 10 gehört ferner eine Simulationswaffe 18, bei der es sich vorliegend beispielhaft um eine simulierte Handfeuerwaffe handelt. Vorzugsweise hat die Simulationswaffe die gleichen Abmessungen, das gleiche Gewicht, den gleichen Schwerpunkt und die gleiche Form wie eine Originalwaffe, und vorzugsweise erzeugt sie beim Auslösen beispielsweise mittels Druckluft und mechanischer Einrichtungen ein ähnliches Geräusch und einen ähnlichen Rückstoß wie die Originalwaffe. Allerdings wird beim Auslösen der Simulationswaffe kein Projektil abgeschossen, sondern lediglich eine Datenerfassung und gegebenenfalls auch Datenverarbeitung ausgelöst, wie weiter unten noch stärker im Detail erläutert werden wird.

Mit der Simulationswaffe 18 ist eine opto-elektronische Erfassungseinrichtung 20 starr gekoppelt. Mittels der opto-elektronischen Erfassungseinrichtung 20 kann an einer mit der Simulationswaffe 18 anvisierten Stelle 22 auf der Zielfläche 12 eine Helligkeitsänderung erfasst werden, wie nachfolgend noch stärker im Detail erläutert werden wird. Die opto-elektronische Erfassungseinrichtung 20 ist dabei so ausgebildet, dass sie lediglich die von einer vergleichsweise kleinen Stelle 22 ausgehende optische Strahlung (Pfeil 23) erfassen kann.

Weiterhin umfasst der Schießsimulator 10 eine Erzeugungseinrichtung 24 zur Erzeugung einer Helligkeitsänderung auf der Zielfläche 12. Die Erzeugungseinrichtung 24 umfasst einen Projektor, der ebenfalls von hinten ein Bild auf die Zielfläche 12 projiziert, was durch gestrichelte Linien 26 angedeutet ist. Die Wellenlänge der von der Erzeugungseinrichtung 24 auf die Zielfläche 12 abgestrahlten Strahlung 26 liegt in einem für das menschliche Auge nicht wahrnehmbaren Bereich, beispielsweise im nahen Infrarotbereich (NIR).

Eine Recheneinrichtung 28 des Schießsimulators 10 umfasst unter anderem einen Mikroprozessor und einen Speicher, auf dem Programmcode abgespeichert ist, der auf dem Mikroprozessor ablaufen kann. Die Recheneinrichtung 28 kann beispielsweise als Computer, insbesondere als PC, ausgebildet sein. Eine MCU (Microcontroller Unit) 32 der opto-elektronischen Erfassungseinrichtung 20 kommuniziert drahtlos (Pfeil 30) mit der Recheneinrichtung 28. Die Recheneinrichtung 28 steuert unter anderem den Projektor 14 an. Die Erzeugungseinrichtung 24 dagegen kann frei sein, muss also nicht zwingend von der Recheneinrichtung 28 angesteuert sein.

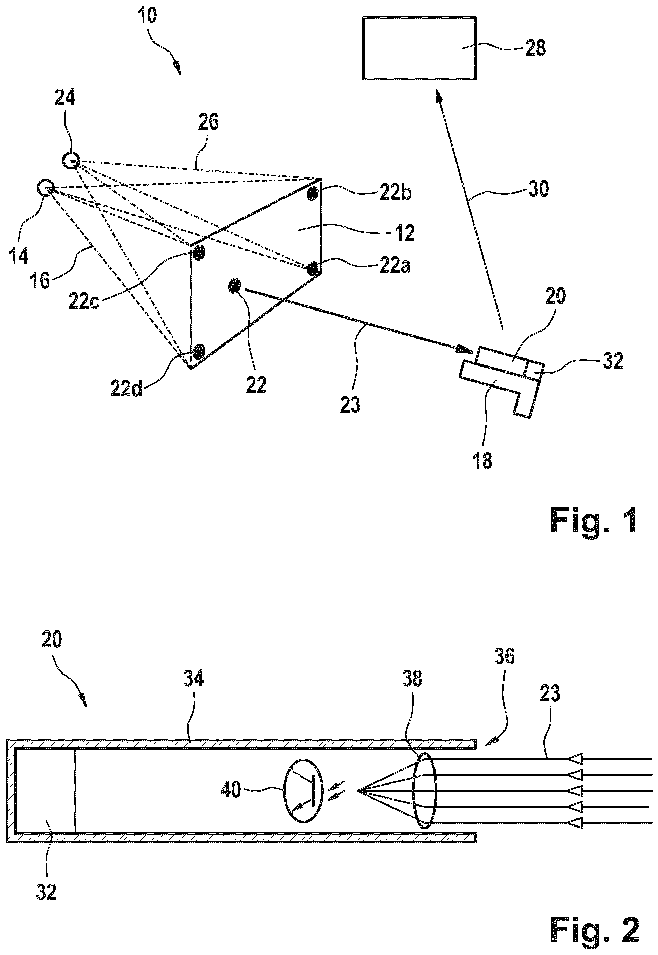

Eine mögliche grundsätzliche Ausgestaltung der opto-elektronischen Erfassungseinrichtung 20 zeigt Figur 2. Demnach umfasst diese ein im Wesentlichen langgestrecktes zylindrisches Gehäuse 34, welches am in Figur 2 rechten Ende 36, welches in Betriebslage von der Simulationswaffe 18 weg in Richtung zur Zielfläche 12 weist, offen ist. Im Inneren des Gehäuses 34, von dem offenen Ende 36 etwas beabstandet, ist eine Fokussieroptik 38 vorhanden, beispielsweise eine Linse. Auf diese Fokussieroptik 38 treffen im Wesentlichen nur die von der anvisierten Stelle 22 ausgehenden optischen Strahlen 23.

Von der Fokussieroptik 38 wird die optische Strahlung 23 auf einen Sensor 40 gelenkt. Bei diesem kann es sich beispielsweise um einen IR-Fototransistor oder um eine IR-Fotodiode handeln. Der Sensor 40 ist so ausgebildet, dass er nur die auf der Zielfläche 12 von der Erzeugungseinrichtung 24 erzeugte Infrarotstrahlung 23 erfassen kann. Über die drahtlose Kommunikation 30 gibt der Sensor 40 ein der ermittelten Position entsprechendes Signal ab an die Recheneinrichtung 28. Ist die erfasste Strahlung 23 hell, ist der Signalpegel hoch, ist die erfasste Strahlung 23 dunkel bzw. schwach, ist der Signalpegel niedrig. Hieraus ermittelt die opto-elektronische Erfassungseinrichtung 20 mittels der MCU 32 selbstständig die Position, welche beispielsweise als Zahlenwert an die Recheneinrichtung 28 gesendet wird.

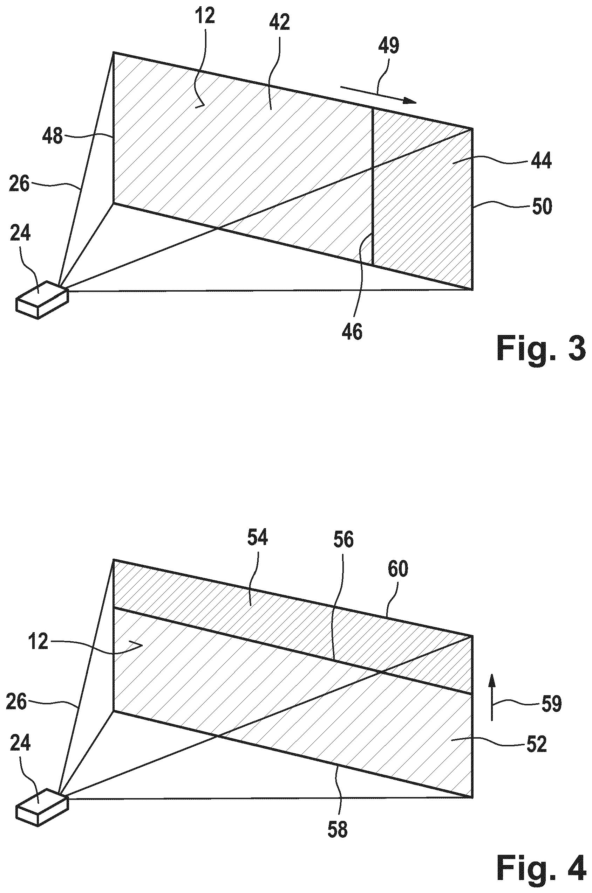

Wie aus Figur 3 ersichtlich ist, kann die Erzeugungseinrichtung 24 auf der Zielfläche 12 ein Bewegtbild der Art erzeugen, dass ein veränderlicher Bereich 42 hell und ein danebenliegender veränderlicher Bereich 44 dunkel ist. Die Hell-Dunkel-Grenze zwischen den beiden Bereichen 42 und 44 ist eine vertikale Linie 46. Dieses Bild ist insoweit bewegt, als sich die Hell-Dunkel-Grenze in einem bestimmten zeitlichen Rhythmus zunächst vom in Figur 3 linken Rand 48 der Zielfläche 12 parallel zu einer horizontalen ersten Richtung 49 zum in Figur 3 rechten Rand 50 der Zielfläche 12 bewegt, dort eine bestimmte Zeit lang verharrt (Bewegungspause), und sich dann wieder vom rechten Rand 50 entgegen der ersten horizontalen Richtung 49 zum linken Rand 48 bewegt.

Vorliegend beispielhaft ist die Geschwindigkeit, mit der sich die Hell-Dunkel-Grenze 46 bewegt, konstant, und beispielhaft brauchte die Hell-Dunkel-Grenze 46 20 ms, um vom linken Rand 48 zum rechten Rand 50 zu gelangen, und sie braucht nochmals 20 ms, um vom rechten Rand 50 wieder zurück zum linken Rand 48 zu gelangen. Die Bewegungspause der Hell-Dunkel-Grenze 46 nach dem Erreichen des rechten Rands 50 dauert beispielhaft 22 ms.

Wie aus Figur 4 ersichtlich ist, kann die Erzeugungseinrichtung 24 auf der Zielfläche 12 ferner ein Bewegtbild der Art erzeugen, dass ein unterer variabler Bereich 52 hell und ein darüber liegender variabler Bereich 54 dunkel ist. Die Hell-Dunkel-Grenze zwischen den beiden Bereichen 52 und 54 ist eine horizontale Linie 56. Dieses Bild ist insoweit bewegt, als sich die Hell-Dunkel-Grenze 56 in einem bestimmten zeitlichen Rhythmus zunächst vom in Figur 4 unteren Rand 58 der Zielfläche 12 parallel zu einer vertikalen zweiten Richtung 49 zum in Figur 3 oberen Rand 60 der Zielfläche 12 bewegt und sich dann sofort wieder vom oberen Rand 60 entgegen der vertikalen zweiten Richtung 59 zum unteren Rand 58 bewegt.

Vorliegend beispielhaft ist die Geschwindigkeit, mit der sich die Hell-Dunkel-Grenze 56 bewegt, konstant, und beispielhaft braucht die Hell-Dunkel-Grenze 56 10 ms, um vom unteren Rand 58 zum oberen Rand 60 zu gelangen, und sie braucht nochmals 10 ms, um vom oberen Rand 60 wieder zurück zum unteren Rand 58 zu gelangen. Man erkennt, dass die Dauer der Bewegungspause (22 ms) größer ist als die Gesamtdauer (20 ms) der Bewegung der Hell-Dunkel-Grenze 56 vom unteren Rand 58 bis zum oberen Rand 60 und zurück.

Die Bilder der Figuren 3 und 4 werden dabei alternierend erzeugt. Dies bedeutet, dass sich zunächst die Hell-Dunkel-Grenze 46 in der horizontalen ersten Richtung 49 von links nach rechts bewegt, dann die Bewegungspause eintritt, und sich dann wieder entgegen der horizontalen ersten Richtung 49 von rechts nach links bewegt. Sobald die Hell-Dunkel-Grenze 46 wieder am linken Rand 48 angelangt ist, bewegt sich die Hell-Dunkel-Grenze 56 in der vertikalen zweite Richtung 59 von unten nach oben und dann sofort wieder von oben nach unten. Wenn die Hell-Dunkel-Grenze 56 wieder am unteren Rand 58 angelangt ist, ist eine Periode abgeschlossen und beginnt sich die Hell-Dunkel-Grenze 46 wieder in der horizontalen ersten Richtung 49 von links nach rechts zu bewegen, usw.

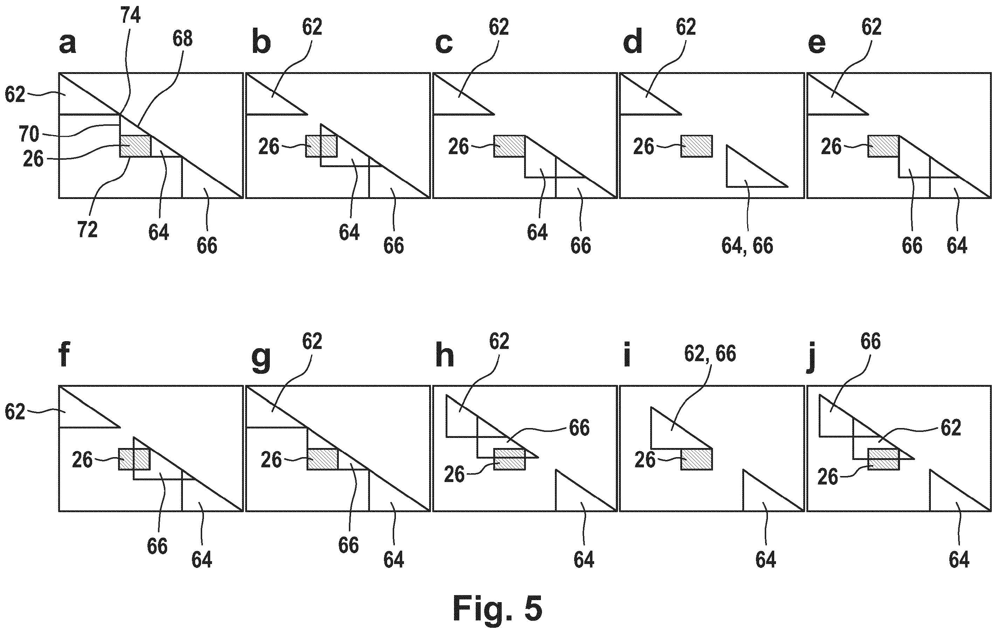

Eine mögliche prinzipielle Ausgestaltung der Erzeugungseinrichtung 24 wird nun unter Bezugnahme auf Figur 5 erläutert. Demnach umfasst die Erzeugungseinrichtung 24 eine Strahlerzeugungseinrichtung (ohne Bezugszeichen) zur Erzeugung der das Bewegtbild bildenden optischen Strahlung 26 sowie vorliegend beispielhaft drei geometrisch identisch ausgebildete und linear bewegliche Blenden 62-66. Die Strahlerzeugungseinrichtung kann eine übliche Infrarot-Lichtquelle sein.

Die Blenden 62-66 haben vorliegend die Form eines rechtwinkligen Dreiecks mit einer Hypotenuse 68, einer Gegenkathete 70 und einer Ankathete 72. Aus Gründen der Übersichtlichkeit sind die entsprechenden Bezugszeichen nur für die Blende 64 links oben in Figur 5a eingetragen. Die Gegenkathete 70 ist dabei vertikal, die Ankathete 72 horizontal ausgerichtet. Die Blenden 62-66 können linear und im Wesentlichen parallel zur jeweiligen Hypotenuse 68 hin und her bewegt werden. In einer mittleren Position einer Blende ist die Gegenkathete 70 mit dem linken Seitenrand des in der Erzeugungseinrichtung 24 vorhandenen Projektionsbilds 26 der Zielfläche 12 ausgerichtet, und ist die Ankathete 72 mit dem unteren Rand des Projektionsbilds 26 ausgerichtet.

In Figur 5a sind die Blenden 62-66 in einer Ausgangslage dargestellt. In dieser überdeckt die Blende 64 Projektionsbild 26 vollständig. Das auf die Zielfläche 12 von der Erzeugungseinrichtung 24 projizierte Bild ist also vollständig dunkel. In Figur 5b hat sich die Blende 64 etwas nach schräg rechts unten bewegt, wodurch die Gegenkathete 70 dieser Blende 64 einen linken Bereich des Projektionsbilds 26 freigibt. Dies entspricht auf der Zielfläche 12 der Bewegung der vertikalen Hell-Dunkel-Grenze 46 in Figur 3 in der horizontalen zweiten Richtung 49.

In Figur 5c hat die Gegenkathete 70 das Projektionsbild 26 vollständig freigegeben. Die vertikale Hell-Dunkel-Grenze 46 auf der Zielfläche 12 in Figur 3 hat somit den rechten Rand 50 der Zielfläche 12 erreicht. Die Blende 64 bewegt sich noch etwas weiter nach schräg rechts unten und hält dann an, und gleichzeitig beginnt sich die Blende 66 nach schräg links oben zu bewegen. In Figur 5d sind beide Blenden 64 und 66 an der gleichen Position, überdecken sich also. Weiterhin wird die komplette Zielfläche 12 von der Erzeugungseinrichtung 24 voll beleuchtet. Dieser Zustand entspricht auf der Zielfläche 12 also der oben erwähnten Bewegungspause der vertikalen Hell-Dunkel-Grenze 46. Diese dauert bis zu Figur 5e, in der die Gegenkathete 70 der Blende 66 am rechten Rand 50 des Projektionsbilds 26 angelangt.

Gemäß den Figuren 5f bis 5g bewegt sich die Blende 66 weiter nach schräg links oben, wodurch auf der Zielfläche 12 die Hell-Dunkel-Grenze 46 wieder vom rechten Rand 50 zum linken Rand 48 der Zielfläche 12 bewegt wird. In Figur 5g hat die Blende 66 mit der rechtwinkligen Dreiecksspitze exakt das linke untere Eck des Projektionsbilds 26 erreicht. Dies entspricht dem Zeitpunkt, zu dem auf der Zielfläche 12 die vertikale Hell-Dunkel-Grenze 46 wieder am linken Rand 48 angelangt.

Wie aus Figur 5h ersichtlich ist, bewegt sich die Blende 66 weiter nach schräg links oben, wodurch die Ankathete 72 nun den unteren Bereich des Projektionsbilds 26 freigibt. Somit bewegt sich auf der Zielfläche 12 jetzt die horizontale Hell-Dunkel-Grenze 56 vom unteren Rand 58 nach oben in Richtung zum oberen Rand 60, der entsprechend der Position der Blende 66 in Figur 5i erreicht wird. Bereits zuvor, gemäß Figur 5h, hat die Blende 62 begonnen, sich aus ihrer Ausgangsstellung nach schräg rechts unten zu bewegen. In Figur 5i sind beide Blenden 62 und 66 an der gleichen Position, überdecken sich also. In dieser Position sind die Ankatheten 72 der beiden Blenden 62 und 66 exakt am oberen Rand des Projektionsbilds 26. Während sich gemäß Figur 5j die Blende 66 weiter nach schräg links oben bewegt und dann anhält, bewegt sich die Blende 62 nach schräg rechts unten, wodurch sich auf der Zielfläche 12 die horizontale Hell-Dunkel-Grenze 56 wieder vom oberen Rand 60 zum unteren Rand 58 der Zielfläche 12 bewegt.

Man erkennt aus der obigen Beschreibung, dass sich die drei Blenden 62-66 zeitlich versetzt und gegensinnig bewegen.

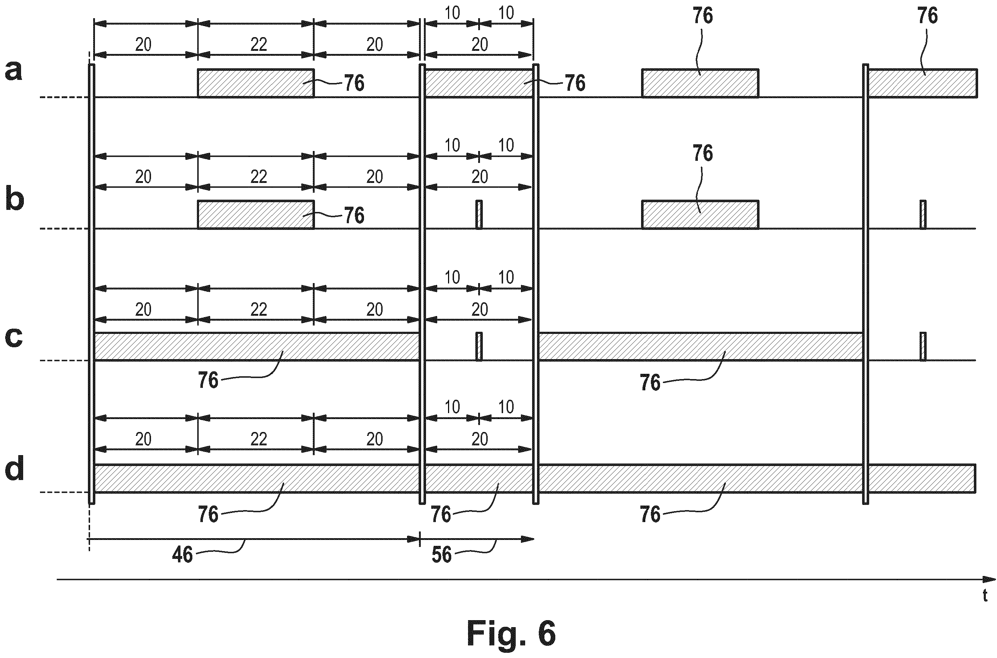

Aus Figur 6a ist der Signalpegel des Sensors 40 ersichtlich, wenn die Simulationswaffe 18 auf das rechte untere Eck 22a der Zielfläche 12 (siehe Figur 1) gerichtet ist, und zwar unterteilt in die Bewegung der vertikalen Hell-Dunkel-Grenze 46 von links nach rechts und zurück und der horizontalen Hell-Dunkel-Grenze 56 von unten nach oben und zurück. Aus Figur 6b ist der Signalpegel des Sensors 40 ersichtlich, wenn die Simulationswaffe 18 auf das rechte obere Eck 22b der Zielfläche 12 (siehe Figur 1) gerichtet ist. Aus Figur 6c ist der Signalpegel des Sensors 40 ersichtlich, wenn die Simulationswaffe 18 auf das linke obere Eck 22c der Zielfläche 12 (siehe Figur 1) gerichtet ist. Aus Figur 6d ist der Signalpegel des Sensors 40 ersichtlich, wenn die Simulationswaffe 18 auf das linke untere Eck 22d der Zielfläche 12 (siehe Figur 1) gerichtet ist. Phasen, in denen der Signalpegel "hoch" ist, tragen das Bezugszeichen 76.

Man erkennt, dass jede der vier anvisierten Stellen 22a-d durch eine einzigartige und somit die besagte Stelle 22 a-d eindeutig identifizierende Kombination der Zeitdauern der Hoch-Signalpegelphasen 76 charakterisiert ist. Diese hängen unmittelbar mit der an der jeweiligen Stelle 22 a-d bewirkten Helligkeitsänderung durch die Bewegung der horizontalen Hell-Dunkel-Grenze 56 und der vertikalen Hell-Dunkel-Grenze 46 zusammen.

Eine Hoch-Signalpegeldauer von 22 ms kann eindeutig dem äußersten rechten Rand 50 der Zielfläche 12 zugeordnet werden, eine Hoch-Signalpegeldauer von 62 ms dagegen dem äußersten linken Rand 48. Eine Hoch-Signalpegeldauer von 20 ms kann eindeutig dem äußersten oberen Rand der Zielfläche 12 zugeordnet werden, eine Hoch-Signalpegeldauer von 0 ms dagegen dem äußersten unteren Rand 58. Durch die Bewegungspause mit einer Länge von 22 ms (jedenfalls länger als die gesamte Bewegungszeit der horizontalen Hell-Dunkel-Grenze 56) bei der Bewegung der vertikalen Hell-Dunkel-Grenze 46 wird somit eine klare Unterscheidung zwischen der Bewegung der vertikalen Hell-Dunkel-Grenze 46 von der Bewegung der horizontalen Hell-Dunkel-Grenze 56 ermöglicht.

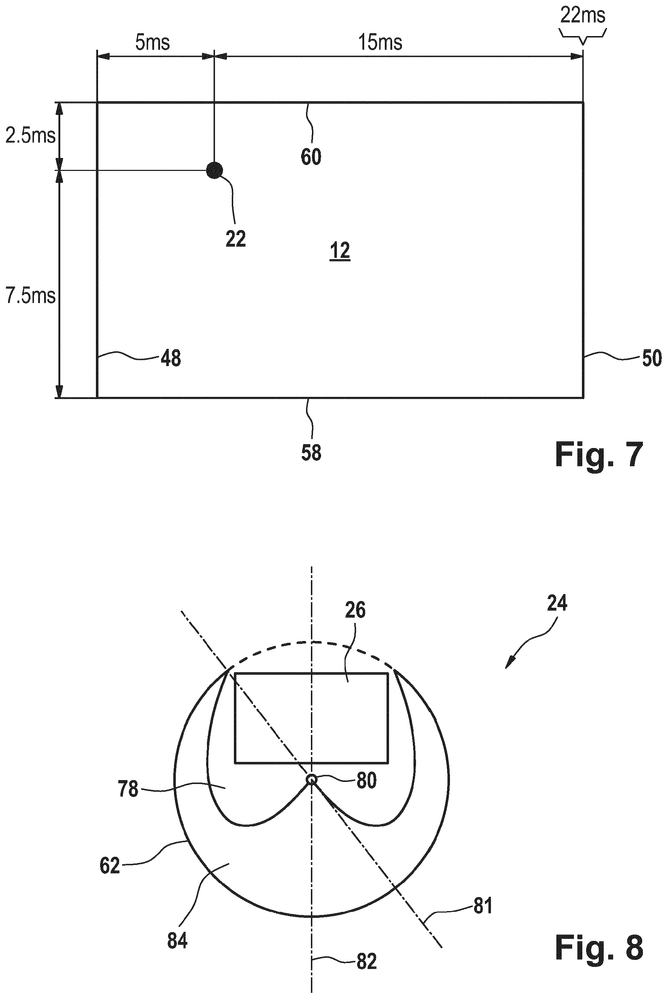

Nun wird unter Bezugnahme auf Figur 7 nochmals dargelegt, wie die Position einer von der opto-elektronischen Erfassungseinrichtung 20 bzw. der Simulationswaffe 18 anvisierten Stelle 22 auf der Zielfläche 12 ermittelt werden kann: es wird, wie im obigen Beispiel, angenommen, dass die vertikale Hell-Dunkel-Grenze 46 20 ms vom linken Rand 48 zum rechten Rand 50 benötigt, dort 22 ms verharrt und 20 ms für den Rückweg benötigt. Ebenso wird, wie im obigen Beispiel, angenommen, dass die horizontale Hell-Dunkel-Grenze 56 10 ms vom unteren Rand 58 bis zum oberen Rand 60 und nochmals 10 ms zurück benötigt. Auf diese Weise dauert eine gesamte Periode 20 + 22 + 20 + 10 + 10 = 82 ms. Beispielhaft wird nun angenommen, die Position der anvisierten Stelle 22 liegt bei 75 % der Höhe und 25 % der Breite der Zielfläche 12.

Wird von der opto-elektronischen Erfassungseinrichtung 20 an der Position der Stelle 22 eine Helligkeitsänderung von Dunkel nach Hell erfasst, ändert sich also der Signalpegel des Sensors 40 nach hoch, und es wird ein erster Zähler gestartet. Eine erste Zeiterfassung erfolgt, wenn eine Helligkeitsänderung von Hell nach Dunkel erfasst wird. Die sich hieraus ergebende erste Zeitgröße würde vorliegend 15 + 22 + 15 = 52 ms betragen.

Wenn wieder eine Helligkeitsänderung von Dunkel nach Hell erfasst wird, wird ein zweiter Zähler gestartet. Eine zweite Zeiterfassung erfolgt, wenn eine Helligkeitsänderung von Hell nach Dunkel erfasst wird. Die sich hieraus ergebende zweite Zeitgröße würde vorliegend 2,5 + 2,5 = 5 ms betragen.

Da die erste Zeitgröße größer ist als 20 ms, kann sie eindeutig der horizontalen Position auf der Zielfläche 12 zugeordnet werden. Aus der ersten Zeitgröße von 52 ms kann durch eine entsprechende Auswerteeinrichtung entweder noch in der Simulationswaffe oder in der Recheneinrichtung 28 die vertikale Positionslinie der Stelle 22 ermittelt werden. Da die zweite Zeitgröße kleiner ist als 22 ms, kann sie eindeutig der vertikalen Position auf der Zielfläche 12 zugeordnet werden. Aus der zweiten Zeitgröße von 5 ms kann wiederum durch die Auswerteeinrichtung oder die Recheneinrichtung 28 die horizontale Positionslinie der Stelle 22 ermittelt werden. Dies kann beispielsweise auf der Basis einer Tabelle oder einer Formel erfolgen, welche der ersten und der zweiten Zeitgröße die entsprechende Position auf den kartesischen Achsen der Zielfläche 12 zuordnet.

Möglich wäre auch, dass unmittelbar aus dem Verhältnis der Ausgangspegelzeiten des Sensors 40 die Position ermittelt wird. Innerhalb einer Periode von 82 ms wäre vorliegend insgesamt der Signalpegel des Sensors 40 52 + 5 = 57 ms lang hoch, und er wäre 5 + 5 + 7,5 + 7,5 = 25 ms lang niedrig. Der sich hieraus ergebende Quotient wäre 2,28 und würde unmittelbar die Position der Stelle 22, wie in Figur 7 gezeichnet, auf der Zielfläche 12 bezeichnen.

Bei der oben im Zusammenhang mit den Figuren 5-7 beschriebenen Ausführungsform der drei dreieckigen Blenden 62-66 bewegen sich diese vor und zurück, und entsprechend bewegen sich auch die Hell-Dunkel-Grenzen 46 und 56 hin und zurück. Bei einer nicht gezeigten Ausführungsform wäre es grundsätzlich aber auch denkbar, dass die Hell-Dunkel-Grenzen immer in der gleichen Richtung über die Zielfläche wandern. Plastisch ausgedrückt, würde bei dieser Ausführungsform "die Sonne" immer am gleichen Ende der Zielfläche aufgehen und am gleichen Ende der Zielfläche untergehen. Für die Auswertung müsste in diesem Fall beispielsweise direkt vom Zeitpunkt der Pegeländerung (quasi "Sonnenaufgangszeit" und "Sonnenuntergangszeit") auf den Ort (quasi den "Längengrad" bzw. "Breitengrad") auf der Zielfläche geschlossen werden.

In Figur 8 ist schematisch eine alternative Ausführungsform einer Erzeugungseinrichtung 24 zur Erzeugung einer Hell-Dunkel-Grenze gezeigt. Die Erzeugungseinrichtung 24 umfasst eine Blende 62 in Form einer kreisförmigen Scheibe mit einer als Freiform ausgebildeten Ausnehmung 78. Die Ausnehmung 78 ist bezüglich einer durch einen Mittelpunkt 80 der Scheibe 62 gehenden und in Figur 8 strichpunktiert gezeichneten Achse 82 symmetrisch. Eine linke Hälfte der Ausnehmung 78 erstreckt sich vom Mittelpunkt 80 im Uhrzeigersinn bogenförmig mit zunächst geringer Krümmung nach schräg unten und links außen, dreht dann mit deutlich stärkerer Krümmung nach oben und endet mit geringerer Krümmung im oberen linken Umfangsrand der Scheibe 62 ungefähr bei einem Umfangswinkel von 335° (strichpunktierte Linie 81).

Die gesamte Weite der Ausnehmung 78 ist derart gewählt, dass das Projektionsbild 26 bei der in Figur 8 gezeigten Stellung vollständig in die Ausnehmung 78 passt. Ein außerhalb von der Ausnehmung 78 gelegener Bereich 84 der Scheibe 62 ist undurchsichtig. Im Betrieb rotiert die Scheibe 62 um eine durch den Mittelpunkt 80 gehende und in Figur 8 senkrecht zur Zeichnungsebene stehende Achse. Auf Grund der Geometrie der Ausnehmung 78 der Scheibe 62 hat die Erzeugungseinrichtung 24 im Betrieb zu jedem Radius eine andere "Licht-an-Zeit". Dabei ist die "Licht-an-Zeit" umso geringer, je größer der Radius, also die Entfernung von der durch den Mittelpunkt 80 gehenden Drehachse ist. Somit kann anhand der "Licht-an-Zeit" die zugehörige Position der anvisierten Stelle 22 ermittelt werden.

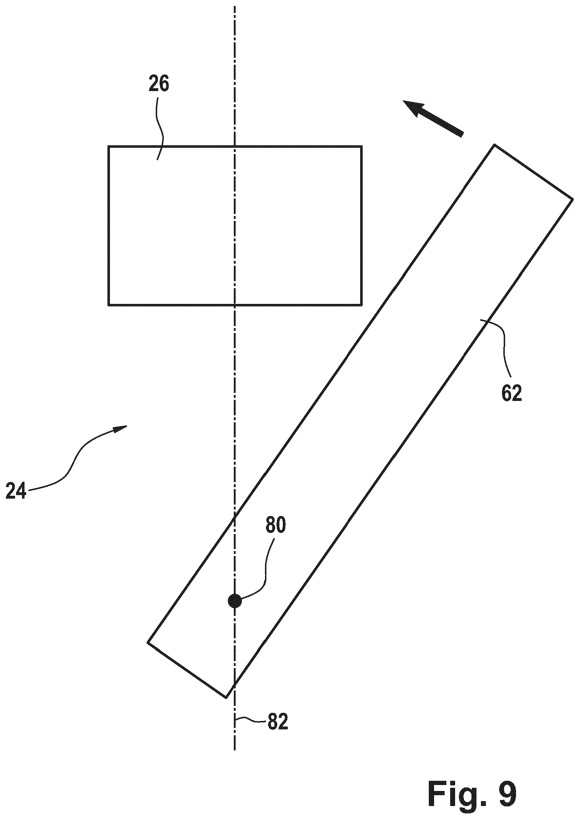

Eine weitere Ausführungsform einer Erzeugungseinrichtung 24 zur Erzeugung einer Hell-Dunkel-Grenze ist in Figur 9 gezeigt. Die Erzeugungseinrichtung 24 von Figur 9 umfasst eine Blende 62 in Form eines rechteckigen Stabes, der um eine senkrecht zur Zeichnungsebene stehende Achse 80 drehbar ist. Die Rotationsgeschwindigkeit ist konstant, und somit ist die Bahngeschwindigkeit in Umfangsrichtung proportional zur Entfernung von der Achse 80. Die Blende 62 erzeugt somit mit steigender Entfernung von der Achse 80 eine kürzere Schattendauer auf dem Projektionsbild 26. Mittels des oben erwähnten Sensors 40 der opto-elektronischen Erfassungseinrichtung 20 kann somit anhand der Dauer des von der Blende 62 geworfenen Schattens eine Radiuslinie ausgehend von der bekannten Position der Achse 80 ermittelt werden.

Die Blende 62 ist so dimensioniert und die Drehachse 80 so angeordnet, dass es mindestens einen Zeitraum während der Rotation der Blende 62 um 360° gibt, in dem das Projektionsbild 26 nicht abgeschaltet ist. Ein solcher Zeitraum wird erkannt, und in diesem wird die Lichtquelle der Erzeugungseinrichtung 24 kurz ausgeschaltet. Der Sensor 40 erkennt dies und ermittelt die Zeit, die vergeht, bis ein Durchlauf eines Schattens der Blende 62 erkannt wird. Aus der ermittelten Zeit kann der Winkel der Blende 62 bzw. des entsprechenden Schattens ermittelt werden. Auf diese Weise kann die zugehörige Position der anvisierten Stelle 22 auf der Radiuslinie ermittelt werden.

## Patentansprüche

1. Verfahren zur Ermittlung der Position einer mittels einer Simulationswaffe (18) anvisierten Stelle auf einer Zielfläche, welches folgende Schritte umfasst:
a. Erzeugen von Helligkeitsänderungen in einem vorzugsweise nicht sichtbaren Wellenlängenbereich auf der Zielfläche (12) an unterschiedlichen Stellen auf der Zielfläche (12) zu unterschiedlichen Zeitpunkten;
b. Anvisieren einer Stelle (22) auf der Zielfläche (12) mittels der Simulationswaffe (18);
c. Erfassen mindestens einer Helligkeitsänderung nur an der anvisierten Stelle (22) auf der Zielfläche (12) mittels einer mit der Simulationswaffe (18) gekoppelten opto-elektronischen Erfassungseinrichtung (20);
d. Ermitteln einer mit der mindestens einen erfassten Helligkeitsänderung zusammenhängenden Zeitgröße; und
e. Ermitteln einer Position der anvisierten Stelle (22) auf der Basis der ermittelten Zeitgröße;
**dadurch gekennzeichnet, dass** der Schritt a folgende Unterschritte umfasst:
a1. Bewegen einer ersten Hell-Dunkel-Grenze (46) parallel zu einer ersten Richtung (49) über die Zielfläche (12);
a2. danach: Bewegen einer zweiten Hell-Dunkel-Grenze (56) parallel zu einer zweiten Richtung (59) über die Zielfläche (12), wobei die zweite Richtung (59) orthogonal zur ersten Richtung (49) ist;
und dass der Schritt a1 folgende Unterschritte umfasst:
a1.1 Bewegen der ersten Hell-Dunkel-Grenze (46) in der ersten Richtung (49);
a1.2 Bewegen der ersten Hell-Dunkel-Grenze (46) entgegen der ersten Richtung (49);
und dass der Schritt a2 folgende Unterschritte umfasst:
a2.1 Bewegen der zweiten Hell-Dunkel-Grenze (56) in der zweiten Richtung (59);
a2.2 Bewegen der zweiten Hell-Dunkel-Grenze (56) entgegen der zweiten Richtung (59);und dass entweder zwischen dem Schritt a1.1 und dem Schritt a1.2 keine Bewegung (Bewegungspause) der ersten Hell-Dunkel-Grenze (46) durchgeführt wird, und dass die Dauer dieser Bewegungspause größer ist als die Gesamtdauer der Schritte a2.1 und a2.2, oder dass zwischen dem Schritt a2.1 und dem Schritt a2.2 keine Bewegung (Bewegungspause) der zweiten Hell-Dunkel-Grenze (56) durchgeführt wird, und dass die Dauer dieser Bewegungspause größer ist als die Gesamtdauer der Schritte a1.1 und a1.2.

2. Verfahren nach wenigstens einem der vorhergehenden Ansprüche, **dadurch gekennzeichnet, dass** die erste Richtung (49) horizontal und die zweite Richtung (59) vertikal ist.

3. Verfahren nach wenigstens einem der vorhergehenden Ansprüche, **dadurch gekennzeichnet, dass** die Helligkeitsänderung in einem Nahinfrarot-Wellenlängenbereich erzeugt wird.

4. Schießsimulator (10), welcher umfasst: eine Zielfläche (12), eine Simulationswaffe (18) und eine Recheneinrichtung (28) mit einem Mikroprozessor und einem Speicher, auf dem Programmcode abgespeichert ist, der auf dem Mikroprozessor ablaufen kann, wobei der Schießsimulator (10) eine Erzeugungseinrichtung (24) zur Erzeugung einer Helligkeitsänderung auf der Zielfläche (12) vorzugsweise in einem nicht sichtbaren Wellenlängenbereich an unterschiedlichen Stellen (22) auf der Zielfläche (12) zu unterschiedlichen Zeitpunkten aufweist, wobei die Simulationswaffe (18) eine opto-elektronische Erfassungseinrichtung (20) zur Erfassung der Helligkeitsänderung nur an einer mit der Simulationswaffe (18) anvisierten Stelle (22) auf der Zielfläche (12) aufweist, und wobei die Recheneinrichtung (28) dazu eingerichtet und ausgebildet ist, eine mit der erfassten Helligkeitsänderung zusammenhängenden Zeitgröße zu ermitteln und auf der Basis der ermittelten Zeitgröße die Position der anvisierten Stelle (22) zu ermitteln, **dadurch gekennzeichnet, dass** die Recheneinrichtung (28) dazu eingerichtet und ausgebildet ist, ein Verfahren mit den Merkmalen der Ansprüche 1-3 auszuführen.

5. Schießsimulator (10) nach Anspruch 4, **dadurch gekennzeichnet, dass** die opto-elektronische Erfassungseinrichtung (20) eine Strahlerfassungsoptik (38) und mindestens einen IR-Fototransistor (40) oder mindestens eine IR-Fotodiode aufweist.

6. Schießsimulator (10) nach wenigstens einem der Ansprüche 4-5, **dadurch gekennzeichnet, dass** die Simulationswaffe (18) eine drahtlose Datenübertragungseinrichtung (30) aufweist, die ein Signal der opto-elektronischen Erfassungseinrichtung (20) und/oder eine hieraus gewonnene Größe an die Recheneinrichtung (28) überträgt.

## Claims

1. Method for determining the position of a point targeted by a simulation weapon (18) on a target surface, comprising the following steps:
a. generating changes in brightness in a preferably non-visible wavelength range on the target surface (12) at different points on the target surface (12) at different times;
b. targeting a point (22) on the target surface (12) using the simulation weapon (18);
c. detecting at least one change in brightness only at the targeted point (22) on the target surface (12) by means of an opto-electronic detection device (20) coupled to the simulation weapon (18);
d. determining a time variable related to the at least one detected change in brightness; and
e. determining a position of the targeted point (22) on the basis of the determined time variable;
**characterized in that** the step a comprises the following sub-steps:
a1. moving a first light-dark boundary (46) parallel to a first direction (49) over the target surface (12);
a2. then: moving a second light-dark boundary (56) parallel to a second direction (59) over the target surface (12), the second direction (59) being orthogonal to the first direction (49);
and **in that** the step a1 comprises the following sub-steps:
a1.1 moving the first light-dark boundary (46) in the first direction (49);
a1.2 moving the first light-dark boundary (46) in the opposite direction to the first direction (49);
and **in that** the step a2 comprises the following sub-steps:
a2.1 moving the second light-dark boundary (56) in the second direction (59);
a2.2 moving the second light-dark boundary (56) in the opposite direction to the second direction (59); and **in that** either no movement (movement pause) of the first light-dark boundary (46) is carried out between the step a1.1 and the step a1.2, and **in that** the duration of this movement pause is greater than the total duration of the steps a2.1 and a2.2, or **in that** no movement (movement pause) of the second light-dark boundary (56) is carried out between the step a2.1 and the step a2.2, and **in that** the duration of this movement pause is greater than the total duration of the steps a1.1 and a1.2.

2. Method according to at least one of the preceding claims, **characterized in that** the first direction (49) is horizontal and the second direction (59) is vertical.

3. Method according to at least one of the preceding claims, **characterized in that** the change in brightness is generated in a near-infrared wavelength range.

4. Shooting simulator (10), which comprises: a target surface (12), a simulation weapon (18) and a computing device (28) having a microprocessor and a memory on which program code is stored that can be executed on the microprocessor, the shooting simulator (10) having a generation device (24) for generating a change in brightness on the target surface (12), preferably in a non-visible wavelength range, at different points (22) on the target surface (12) at different times, the simulation weapon (18) having an opto-electronic detection device (20) for detecting the change in brightness only at a point (22) on the target surface (12) targeted by the simulation weapon (18), and the computing device (28) being configured and designed to determine a time variable related to the detected change in brightness and to determine the position of the targeted point (22) on the basis of the determined time variable, **characterized in that** the computing device (28) is configured and designed to perform a method having the features of claims 1-3.

5. Shooting simulator (10) according to claim 4, **characterized in that** the opto-electronic detection device (20) has a beam detection optic (38) and at least one IR phototransistor (40) or at least one IR photodiode.

6. Shooting simulator (10) according to at least one of claims 4-5, **characterized in that** the simulation weapon (18) has a wireless data transmission device (30) which transmits a signal from the opto-electronic detection device (20) and/or a variable obtained therefrom to the computing device (28).

## Revendications

1. Procédé de détermination de la position d'un emplacement sur une surface cible ciblé au moyen d'une arme de simulation (18), qui comprend les étapes suivantes consistant à:
a. générer des changements de luminosité dans une plage de longueurs d'onde de préférence invisible sur la surface cible (12) à différents emplacements sur la surface cible (12) à différents moments;
b. cibler un emplacement (22) sur la surface cible (12) au moyen de l'arme de simulation (18);
c. détecter au moins un changement de luminosité uniquement à l'emplacement ciblé (22) sur la surface cible (12) au moyen d'un dispositif de détection optoélectronique (20) couplé à l'arme de simulation (18);
d. déterminer une grandeur temporelle qui est en rapport avec ledit au moins un changement de luminosité détecté; et
e. déterminer une position de l'emplacement ciblé (22) sur la base de la grandeur temporelle déterminée;
**caractérisé par le fait que** l'étape a comprend les sous-étapes suivantes:
a1. déplacer une première limite claire-obscure (46) parallèlement à une première direction (49) sur la surface cible (12);
a2. puis: déplacer une deuxième limite claire-obscure (56) parallèlement à une deuxième direction (59) sur la surface cible (12), dans lequel la deuxième direction (59) est orthogonale à la première direction (49);
et que l'étape a1 comprend les sous-étapes suivantes:
a1.1 déplacer la première limite claire-obscure (46) dans la première direction (49);
a1.2 déplacer la première limite claire-obscure (46) dans le sens inverse de la première direction (49);
et que l'étape a2 comprend les sous-étapes suivantes:
a2.1 déplacer la deuxième limite claire-obscure (56) dans la deuxième direction (59);
a2.2 déplacer la deuxième limite claire-obscure (56) dans le sens inverse de la deuxième direction (59); et que soit aucun mouvement (pause de mouvement) de la première limite claire-obscure (46) n'est effectué entre l'étape a1.1 et l'étape a1.2, et que la durée de cette pause de mouvement est supérieure à la durée totale des étapes a2.1 et a2.2, soit qu'aucun mouvement (pause de mouvement) n'est effectué entre l'étape a2.1 et l'étape a2.2 de la deuxième limite claire-obscure (56), et que la durée de cette pause de mouvement est supérieure à la durée totale des étapes a1.1 et a1.2.

2. Procédé selon au moins l'une quelconque des revendications précédentes, **caractérisé par le fait que** la première direction (49) est horizontale et la deuxième direction (59) est verticale.

3. Procédé selon au moins l'une quelconque des revendications précédentes, **caractérisé par le fait que** le changement de luminosité est généré dans une plage de longueurs d'onde proche infrarouge.

4. Simulateur de tir (10) qui comprend: une surface cible (12), une arme de simulation (18) et un dispositif informatique (28) doté d'un microprocesseur et d'une mémoire sur laquelle est stocké un code de programme qui peut s'exécuter sur le microprocesseur, le simulateur de tir (10) ayant un dispositif générateur (24) pour générer un changement de luminosité sur la surface cible (12), de préférence dans une plage de longueurs d'onde invisible, à différents emplacements (22) sur la surface cible (12) à différents moments, dans lequel l'arme de simulation (18) comprend un dispositif de détection optoélectronique (20) pour détecter le changement de luminosité uniquement à un emplacement (22) sur la surface cible (12) ciblé par l'arme de simulation (18), et dans lequel le dispositif informatique (28) est configuré et conçu pour déterminer une grandeur temporelle qui est en rapport avec le changement de luminosité détecté et pour déterminer, sur la base de la grandeur temporelle déterminée, la position de l'emplacement ciblé (22), **caractérisé par le fait que** le dispositif informatique (28) est configuré et conçu pour mettre en œuvre un procédé présentant les caractéristiques des revendications 1 à 3.

5. Simulateur de tir (10) selon la revendication 4, **caractérisé par le fait que** le dispositif de détection optoélectronique (20) comprend une optique de détection de faisceau (38) et au moins un phototransistor IR (40) ou au moins une photodiode IR.

6. Simulateur de tir (10) selon l'une au moins quelconque des revendications 4-5, **caractérisé par le fait que** l'arme de simulation (18) comprend un dispositif de transmission de données sans fil (30) qui transmet un signal du dispositif de détection optoélectronique (20) et/ou une grandeur obtenue à partir de celui-ci au dispositif informatique (28).
